Europäisches Patentamt

European Patent Office

Office européen des brevets

(11) Numéro de publication : **0 436 413 B1**

(12) **FASCICULE DE BREVET EUROPEEN**

(45) Date de publication du fascicule du brevet :
**01.03.95 Bulletin 95/09**

(51) Int. Cl.$^6$ : **G02F 1/015**

(21) Numéro de dépôt : **90403402.2**

(22) Date de dépôt : **29.11.90**

(54) *Procédé et dispositif de modulation électro-optique utilisant la transition oblique à basse énergie d'un super-réseau très couplé.*

(30) Priorité : **01.12.89 FR 8915909**

(43) Date de publication de la demande :
**10.07.91 Bulletin 91/28**

(45) Mention de la délivrance du brevet :
**01.03.95 Bulletin 95/09**

(84) Etats contractants désignés :
**DE GB**

(56) Documents cités :
**EP-A- 0 274 289**
**EP-A- 0 328 214**
**APPLIED PHYS. LETT., vol. 53, no. 26, 26 décembre 1988, pages 2632-2634; J.BLEUSE et al.: "Blue shift of the absorption edge in AlGaInAs-GaInAs sup-erlattices:Proposal for an original electro-optical modulator"**

(56) Documents cités :
**APPLIED PHYS. LETT., vol. 54, no. 16, 17 avril 1989, pages 1549-1551; R.H. YANet al.: "Room-temperature two-dimensional excition exchange and blue shift ofabsorption edge in GaAs/AlGaAs superlattices under an electric field"**

(73) Titulaire : **FRANCE TELECOM**
**6, Place d'Alleray**
**F-75015 Paris (FR)**

(72) Inventeur : **Bigan, Erwan**
**11 rue Barrault**
**F-75013 Paris (FR)**
Inventeur : **Allovon, Michel**
**49 Avenue Jean Moulin**
**F-92260 Fontenay (FR)**
Inventeur : **Voisin, Paul**
**13 rue de l'Epée de Bois**
**F-75005 Paris (FR)**

(74) Mandataire : **Mongrédien, André et al**
**c/o BREVATOME**
**25, rue de Ponthieu**
**F-75008 Paris (FR)**

## Description

La présente invention concerne un procédé et un dispositif de modulation électro-optique. Elle trouve notamment des applications dans le domaine des télécommunications optiques, par exemple pour les liaisons numériques de haut débit et sur une longue distance, ainsi que dans le domaine de la commutation électro-optique.

L'invention fait partie des techniques de modulation de l'intensité d'un faisceau lumineux, qui utilisent le phénomène d'électro-absorption. Ce phénomène, qui se manifeste dans un matériau semiconducteur, consiste en la variation d'absorption optique de ce matériau sous l'effet d'un champ électrique.

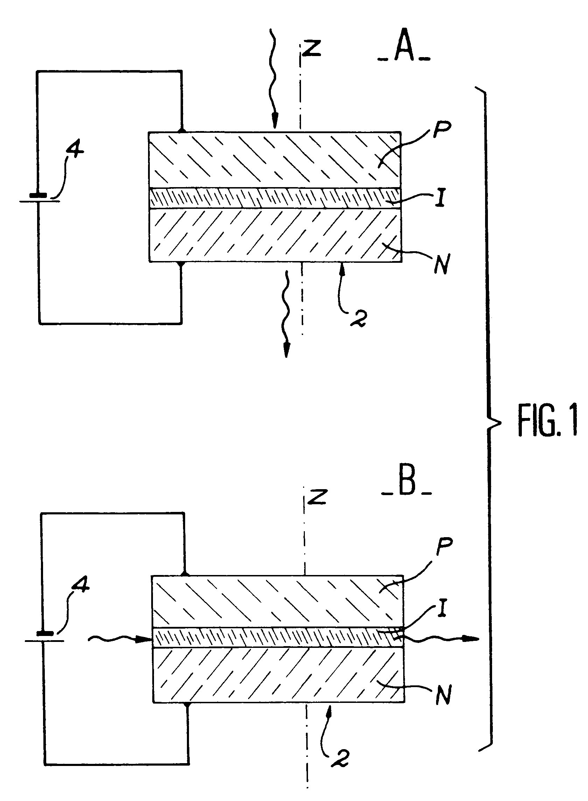

Ce dernier est appliqué au matériau par exemple au moyen d'une diode 2 de type PIN (figure 1), ou de type Schottky, qui est polarisée grâce à un moyen approprié 4 et dans laquelle la région intrinsèque I (non intentionnellement dopée) contient le matériau électro-absorbant.

Certaines techniques utilisent une configuration de type "perpendiculaire" (figure 1-A) dans laquelle la lumière est envoyée sur la diode suivant l'axe de croissance Z de celle-ci. D'autres techniques utilisent une configuration de type "ondes guidées" (figure 1-B) dans laquelle la lumière est injectée dans la région intrinsèque I, parallèlement au plan des couches P, I et N.

Vis-à-vis de la configuration de type "perpendiculaire", cette configuration de type "ondes guidées" permet d'augmenter la longueur d'interaction sur laquelle la lumière est absorbée par le matériau semiconducteur, la majeure partie de la lumière guidée se situant dans la région I.

Les différentes techniques de modulation de l'intensité d'un faisceau lumineux, qui utilisent une configuration de type "ondes guidées", se différencient par l'effet physique mis en oeuvre pour obtenir la variation d'absorption optique sous l'effet d'un champ électrique.

Jusqu'à présent, trois effets physiques ont été proposés : l'effet Franz-Keldysh, l'effet Stark confiné quantiquement et l'effet de décalage vers le bleu ("blue shift") du seuil d'absorption dans les super-réseaux très couplés.

L'effet Franz-Keldysh est un décalage vers le rouge ("red shift") du seuil d'absorption d'un matériau semiconducteur massif en présence d'un champ électrique.

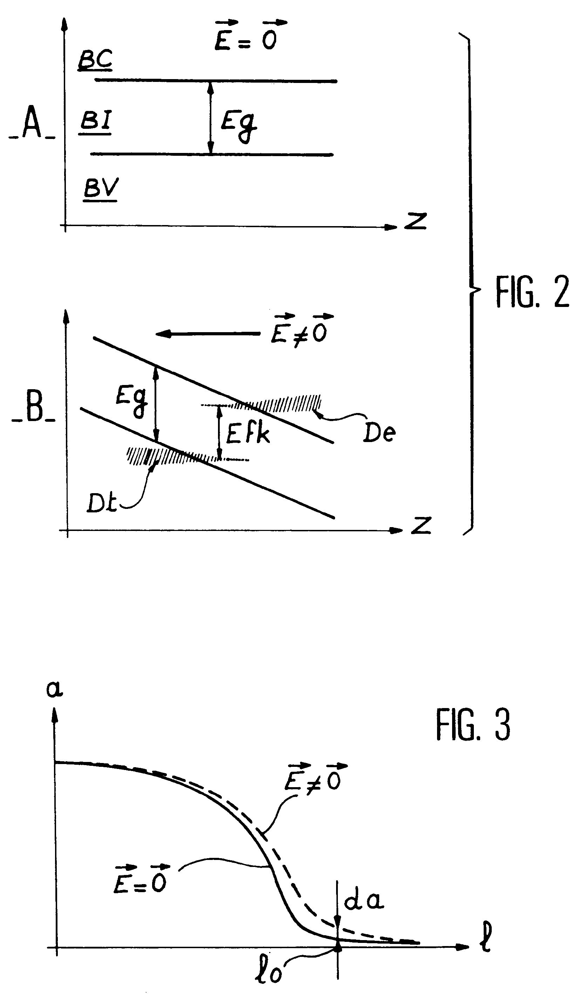

On voit sur la figure 2-A la bande de valence BV et la bande de conduction BC du matériau semiconducteur, qui sont séparées par une bande interdite BI de largeur $E_g$, en l'absence de champ électrique ($E=0$).

On voit sur la figure 2-B que l'application d'un champ électrique au matériau semiconducteur ($E\neq0$) rompt la périodicité du matériau dans la direction de ce champ, périodicité qui crée des bandes interdites.

Cette rupture de périodicité rend possible la présence d'électrons et de trous dans la bande "ex-interdite", dans laquelle la densité de probabilité de présence des électrons $D_e$ et la densité de probabilité de présence des trous $D_t$ ne sont pas nulles.

Il apparait alors une possibilité de transition à une énergie $E_{fK}$ inférieure à $E_g$, ce qui correspond à un décalage vers le rouge du seuil d'absorption.

Ceci est schématiquement illustré par la figure 3 où l'on voit le spectre d'absorption d'un matériau semiconducteur massif (courbe des variations de l'absorption optique $\underline{a}$ en fonction de la longueur d'onde $\underline{l}$) en présence d'un champ électrique ($E\neq0$) et en l'absence de champ électrique ($E=0$).

Ce décalage vers le rouge permet d'obtenir des variations d'absorption $\underline{da}$ (typiquement de l'ordre de $100~cm^{-1}$ pour une tension électrique de 5 V appliquée à une épaisseur de 0,5 micromètre) dans le domaine des longueurs d'onde où le matériau est transparent, et donc de réaliser un modulateur fonctionnant à la longueur d'onde $l_o$ indiquée sur la figure 3.

Un exemple de réalisation d'un modulateur utilisant l'effet Franz-Keldysh dans une configuration de type "ondes guidées" est donné dans l'article de Y. NODA et al., publié dans IEEE Journal of Lightwave Technology, vol. LT-4, n°10, octobre 1986, p.1445 à 1453.

L'effet Stark confiné quantiquement est un effet de décalage vers le rouge du seuil d'absorption d'une structure à multipuits quantiques ("multiple quantum-well structure").

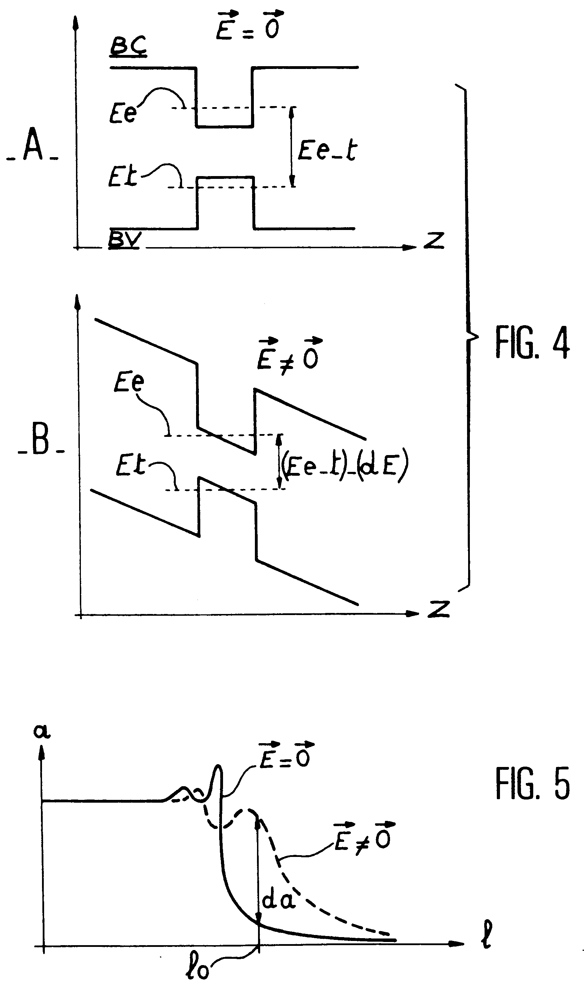

Pour simplifier, on a représenté sur la figure 4 la structure de bande d'un puits quantique en l'absence de champ électrique (figure 4-A) et en présence d'un champ électrique (figure 4-B).

On voit, sur la figure 4-A, qu'en l'absence de champ électrique, le niveau fondamental d'énergie $E_e$ des électrons et le niveau fondamental d'énergie $E_t$ des trous sont séparés par une énergie $E_{e-t}$.

En présence d'un champ électrique (figure 4-B), ces niveaux d'énergie dans les puits quantiques se déplacent et l'énergie de transition électron-trou ($E_{e-t}$) est diminuée d'une quantité $dE$, d'où un décalage vers le rouge du spectre d'absorption.

Ceci est schématiquement illustré par la figure 5 où l'on voit le spectre d'absorption d'une structure à multipuits quantiques en présence d'un champ électrique ($E\neq0$) et en l'absence de champ électrique ($E=0$).

Le spectre d'absorption de cette structure à multipuits quantiques a une allure de marche d'escalier à laquelle viennent s'ajouter les pics d'absorption excitonique dont l'origine est l'interaction hydrogénoïde électron-trou. L'ensemble du spectre se décale vers le rouge par effet Stark confiné quantiquement.

On peut ainsi obtenir des variations d'absorption $\underline{da}$ très importantes dans le domaine des longueurs d'ondes où la structure est transparente (typiquement de l'ordre de 1000 cm⁻¹ pour une tension électrique de 5 V appliquée à une épaisseur de 0,5 micromètre).

Un exemple de réalisation d'un modulateur utilisant l'effet Stark confiné quantiquement dans une configuration de type "ondes guidées" est donné dans l'article de K. WAKITA et al., publié dans Electronics Letters, 13 octobre 1988, vol. 24, n°21, p.1324 et 1325.

L'effet de décalage vers le bleu du seuil d'absorption dans les super-réseaux très couplés est décrit dans l'article de J. BLEUSE, G. BASTARD et P. VOISIN publié dans Phys. Rev. Lett., vol. 60, n°3, 18 janvier 1988, p. 220 à 223, dans l'article de J. BLEUSE, P. VOISIN, M. ALLOVON et M. QUILLEC, publié dans Applied Physics Letters 53(26), 26 décembre 1988, p. 2632 à 2634, et dans la demande de brevet français n°8616576 du 27 novembre 1986 auxquels on se reportera.

On rappelle qu'une structure à multipuits quantiques est une succession de puits et de barrières de potentiel, dans laquelle l'épaisseur des barrières est suffisamment importante pour que les puits ne soient pas couplés les uns avec les autres.

Au contraire, un super-réseau très couplé est une succession de puits et de barrières de potentiel, dans laquelle les épaisseurs respectives des puits et des barrières sont très faibles, de sorte que les puits sont très couplés les uns avec les autres, par l'effet tunnel résonnant.

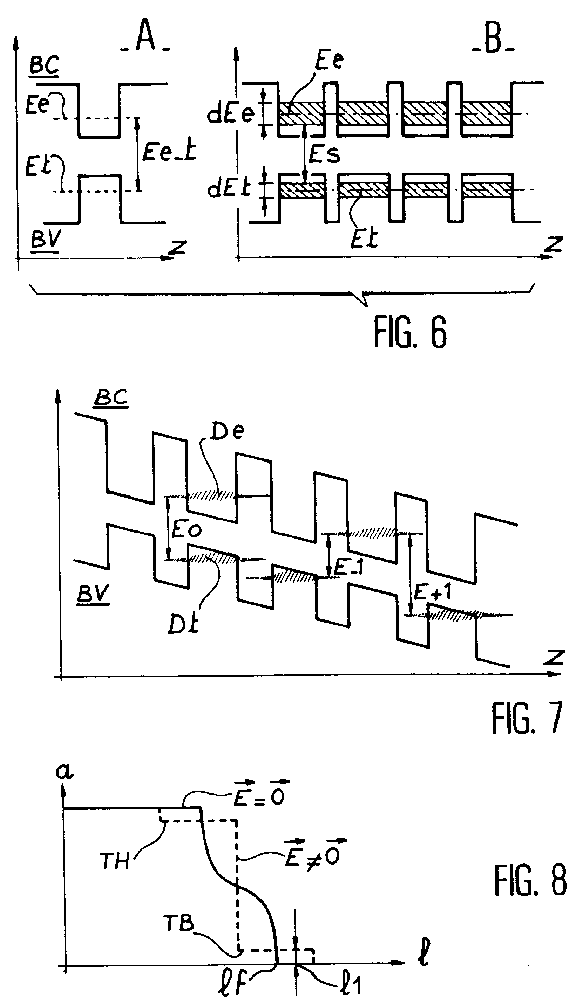

Ce fort couplage entraîne la création de minibandes d'énergie de largeurs dEe et dEt (figure 6-B), respectivement autour des niveaux d'énergie quantifiés d'électrons et de trous que présenteraient les puits sans couplage (figure 6-A).

On rappelle à ce propos qu'un super-réseau très couplé est tel que :

$$dEe\ +\ dEt \geqq 10\ meV.$$

Par application au super-réseau d'un faible champ électrique selon la direction de croissance de ce super-réseau, on brise le couplage (il y a suppression de l'effet tunnel résonnant) et le seuil d'absorption se décale vers les hautes énergies (c'est-à-dire vers le bleu) d'une valeur égale à la demi-somme des largeurs respectives des minibandes d'électrons et de trous.

Ainsi, l'énergie de ce seuil passe d'une valeur Es à une valeur Ee-t telle que :

$$Ee\text{-}t\ =\ Es\ +\ ((dEe\ +\ dEt)/2).$$

On rappelle ci-après trois paramètres essentiels pour évaluer les performances d'un dispositif de modulation de l'intensité d'un faisceau lumineux. Ces paramètres sont le taux d'extinction, l'atténuation à l'état passant ("on") et la tension de commande du dispositif.

Le taux d'extinction est le rapport de l'intensité lumineuse sortant du modulateur à l'état passant, à l'intensité lumineuse sortant du modulateur à l'état éteint ("off"). Ce taux d'extinction peut être exprimé en % ou en dB. Il doit être le plus élevé possible (typiquement de l'ordre de 20 dB). Il est directement relié à la variation d'absorption.

L'atténuation à l'état passant est le rapport de l'intensité lumineuse sortant du modulateur à l'état passant, à l'intensité lumineuse entrant dans le modulateur. Cette atténuation à l'état passant peut être exprimée en dB. Elle doit être la plus faible possible (typiquement inférieure ou égale à environ 3 dB). Elle est directement reliée à l'absorption résiduelle dans le domaine de longueurs d'onde où le matériau électroabsorbant du modulateur est transparent.

La tension de commande du dispositif doit être aussi faible que possible. Elle est directement reliée au champ électrique à appliquer au matériau électroabsorbant que comporte le dispositif.

Vis-à-vis de ces trois paramètres, les techniques qui utilisent respectivement les trois effets mentionnés plus haut présentent les inconvénients suivants :

Les modulateurs utilisant l'effet Franz-Keldysh et les modulateurs utilisant l'effet Stark confiné quantiquement nécessitent l'application de champs électriques importants, typiquement de l'ordre de 10 V par micromètre, soit une tension de 5 V appliquée à une épaisseur de 0,5 micromètre. De telles tensions de commande entraînent une dissipation d'énergie importante en cas de modulation rapide (fréquences de quelques GHz).

Les modulateurs utilisant l'effet de décalage vers le bleu présentent une importante atténuation à l'état passant (c'est-à-dire lorsque le champ électrique n'est pas nul). Cela tient à deux raisons :

- le point de fonctionnement d'un modulateur de ce genre se situe à une longueur d'onde très proche du seuil d'absorption ; les élargissements liés à la température et aux imperfections du super-réseau font apparaître une queue d'absorption qui se situe vers les basses énergies et dont les effets sont importants au voisinage du seuil d'absorption ;
- simultanément au décalage vers le bleu apparaît une transition "oblique" à basse énergie que l'on a représentée sur la figure 8 décrite plus loin.

Il est d'ailleurs indiqué à la page 1551, colonne gauche, lignes 6 à 11 de l'article de R.H. YAN et al., publié dans Applied Physics Letters 54(16), 17 avril 1989, p.1549 à 1551, que cette atténuation à l'état passant est très importante.

La présente invention vise un procédé et un dispositif de modulation de l'intensité d'un faisceau lumineux qui n'ont pas les inconvénients précédents et qui présentent à la fois un taux d'extinction élevé (par exemple de l'ordre de 20 dB), une tension de commande faible (par exemple de l'ordre de 1V) et une faible atténuation à l'état passant (par exemple de l'ordre de 3dB).

A cet effet, la présente invention utilise l'un des phénomènes qui pénalisent l'atténuation à l'état passent dans le cas du décalage vers le bleu, à savoir l'apparition de la transition oblique à basse énergie (c'est-à-dire à grande longueur d'onde).

De façon précise, la présente invention a tout d'abord pour objet un procédé de modulation de l'intensité d'un faisceau lumineux, conformément à la revendication 1.

Dans la présente invention, étant donné une longueur d'onde de travail L1 (longueur d'onde du faisceau lumineux que l'on veut moduler), on utilise donc un super-réseau fortement couplé dont le front d'absorption, en l'absence de champ électrique, se trouve à une longueur d'onde inférieure à l1 ; le super-réseau est donc transparent à cette longueur d'onde l1 en l'absence de champ électrique.

Au contraire, dans la technique de modulation utilisant le décalage vers le bleu, étant donné une longueur d'onde de travail lo, on utilise un super-réseau dont le front d'absorption, en l'absence de champ électrique, se trouve à une longueur d'onde supérieure à lo ; le super-réseau est donc opaque à cette longueur d'onde lo en l'absence de champ électrique.

Par "faible champ électrique" on entend un champ électrique $\bar{E}$ tel que la quantité

$$\frac{e_0 |\bar{E}|_0 D}{dEe + dEt}$$

où e est la charge électronique élémentaire et D est la somme de la largeur d'un puits et de la largeur d'une barrière, ne dépasse pas 1 environ.

L'épaisseur du super-réseau et la tension de commande peuvent ainsi être respectivement de l'ordre de 0,5 micromètre et de l'ordre de 1V.

Selon un mode de mise en oeuvre particulier du procédé objet de l'invention, le super-réseau est compris dans le coeur d'un guide d'ondes lumineuses, ce guide d'onde comportant deux couches entre lesquelles se trouve le coeur et dont les indices optiques respectifs sont inférieurs à l'indice optique du super-réseau.

La longueur du guide d'onde est choisie en fonction des besoins (entre autres : taux d'extinction et atténuation à l'état passant souhaités). Elle est ajustable par clivage.

Le guide d'onde peut être une diode de type PIN que l'on polarise, dont la région intrinsèque I contient le super-réseau et dont les régions P et N ont des indices optiques inférieurs à l'indice optique du super-réseau.

Avec un faisceau lumineux dont la longueur d'onde est de l'ordre de 1,5 micromètre, on peut par exemple utiliser un super-réseau résultant de L'empilement de couches alternées de GaInAs et de AlInAs, ou de l'empilement de couches alternées de GaInAs et de InP.

Avec un faisceau lumineux dont la longueur d'onde est de l'ordre de 0,8 micromètre, on peut par exemple utiliser un super-réseau résultant de l'empilement de couches alternées de GaAs et de GaAlAs.

Bien entendu, pour d'autres fenêtres spectrales, il est possible de trouver d'autres matériaux semiconducteurs pour fabriquer des super-réseaux permettant la mise en oeuvre de l'invention.

L'invention a également pour objet un dispositif de modulation de l'intensité d'un faisceau lumineux, conformément à la revendication 8.

La présente invention sera mieux comprise à la lecture de la description d'exemples de réalisation donnés ci-après à titre purement indicatif et nullement limitatif en référence aux dessins annexés sur lesquels :

- la figure 1 représente schématiquement une diode de type PIN dont la région intrinsèque I contient un matériau électro-absorbant qui interagit avec un faisceau lumineux dans une configuration de type "perpendiculaire" (A) et dans une configuration de type "ondes guidées" (B), et a déjà été décrite,
- la figure 2 illustre schématiquement la structure de bande d'un matériau semiconducteur massif en l'absence de champ électrique (A) et en présence d'un champ électrique (B), et à déjà été décrite,
- la figure 3 représente le spectre d'absorption d'un matériau semiconducteur en l'absence de champ électrique (E=0) et en présence d'un champ électrique (E≠0), et a déjà été décrite,
- la figure 4 représente la structure de bande d'un puits quantique en l'absence de champ électrique (A) et en présence d'un champ électrique (B), et a déjà été décrite,
- la figure 5 représente le spectre d'absorption d'une structure à puits quantiques en l'absence de champ électrique (E=0) et en présence d'un champ électrique (E≠0), et a déjà été décrite,
- la figure 6 représente les structures de bande respectives d'un puits quantique isolé (A) et d'un super-réseau très couplé (B), et a déjà été décrite,
- la figure 7 représente la structure de bande d'un super-réseau très couplé en présence d'un faible champ électrique dirigé selon la direction de croissance du super-réseau,
- la figure 8 représente le spectre d'absorption d'un super-réseau très couplé en l'absence de champ électrique (E=0) et en présence d'un faible champ électrique (E≠0),
- la figure 9 illustre schématiquement un dispositif de modulation conforme à l'invention (A), ce dispositif comprenant une diode PIN, et montre également le profil d'indice optique correspondant (B-I) et le profil de l'intensité de la lumière guidée par la zone I de la diode PIN (B-II), et

- la figure 10 représente les variations de l'intensité lumineuse Is à la sortie d'un dispositif du genre de celui de la figure 9, en fonction de la tension de polarisation inverse V appliquée à ce dernier.

Sur la figure 7, on a représenté la structure de bande d'un super-réseau très couplé en présence d'un faible champ électrique appliqué selon la direction de croissance du super-réseau. Ce dernier a par exemple une épaisseur de l'ordre de 0,5 micromètre et il est soumis à une tension de 1V, apte à engendrer le champ électrique.

L'application du champ électrique entraîne un décalage vers le bleu du seuil d'absorption du super-réseau. Simultanément, des transitions obliques entre puits quantiques voisins apparaissent à plus haute énergie ($E_{+1}$) et à plus basse énergie ($E_{-1}$) que la transition fondamentale ($E_0$) du super-réseau.

On voit aussi sur la figure 7 les densités de probabilité de présence respectives De et Dt des électrons et des trous, qui autorisent ces transitions obliques.

Le spectre d'absorption du super-réseau (variation du coefficient d'absorption $\underline{a}$ en fonction de la longueur d'onde l) est représenté sur la figure 8, en l'absence de champ électrique (E=0) et en présence du faible champ électrique (E≠0).

On voit sur cette figure 8 la transition oblique à haute énergie TH et la transition oblique à basse énergie TB qui apparaissent en présence du faible champ électrique.

Selon la présente invention, pour réaliser un dispositif de modulation (ou modulateur) d'intensité lumineuse, on utilise, en tant que matériau électro-absorbant, un super-réseau très couplé et l'on fait interagir avec ce dernier un faisceau lumineux dans une configuration de type "ondes guidées".

A cet effet, on peut réaliser un guide d'ondes dont le coeur contient le super-réseau, ce dernier étant réalisé de façon que la longueur d'onde lf, correspondant au front d'absorption du super-réseau en l'absence de champ électrique, soit inférieure à la longueur d'onde l1 du faisceau lumineux (longueur d'onde de fonctionnement), et en outre que l'intervalle de longueurs d'onde correspondant à la transition oblique à basse énergie susceptible de se produire dans le super-réseau contienne l1.

La longueur d'onde de fonctionnement est donc dans la zone de transparence du super-réseau au repos, c'est-à-dire en l'absence de champ électrique.

Par application d'un faible champ électrique selon la direction de croissance du super-réseau, la transition à basse énergie apparaît et rend le super-réseau opaque à la longueur d'onde de fonctionnement l1.

Les variations d'absorption obtenues par apparition de la transition oblique à basse énergie sont relativement faibles (quelques centaines de cm$^{-1}$). Elles sont nettement moins importantes que celles obtenues par effet Stark confiné quantiquement ou par décalage vers le bleu. Néanmoins elles présentent plusieurs avantages :

- Elles apparaissent dans une région où l'absorption à l'état passant est très faible. En utilisant une longueur de guide d'onde adéquate, on peut donc obtenir un bon taux d'extinction tout en conservant une atténuation à l'état passant faible.
- Elles apparaissent pour des champs électriques faibles et donc pour des tensions de commande faibles (typiquement 1V appliqué à une épaisseur de 0,5 micromètre).
- Elles permettent un fonctionnement sur une plage spectrale relativement large et permettent donc une grande tolérance de fabrication de modulateurs conformes à l'invention ainsi qu'une optimisation aisée de tels modulateurs.

L'utilisation d'un super-réseau très couplé avec une configuration du type "ondes guidées" permet donc de réaliser un modulateur d'intensité lumineuse utilisant la transition oblique à basse énergie et présentant les caractéristiques suivantes simultanément : taux d'extinction élevé, faible atténuation à l'état passant et faible tension de commande.

Les matériaux semiconducteurs et les techniques de croissance correspondantes permettant de réaliser un dispositif de modulation conforme à l'invention sont choisis en fonction de la longueur d'onde de fonctionnement désirée.

A titre purement indicatif et nullement limitatif, pour un fonctionnement autour de 0,8 micromètre, le système de matériaux (puits/barrière) choisi est par exemple le système (GaAs/GaAlAs) épitaxié par jets moléculaires (MBE) ou par croissance par organométalliques en phase vapeur (MOCVD) sur un substrat en GaAs ; et pour un fonctionnement dans les fenêtres spectrales situées respectivement autour de 1,3 micromètre et de 1,5 micromètre, on peut par exemple choisir le système (GaInAs/InP) épitaxié par MOCVD sur un substrat en InP, ou bien le système (GaInAs/AlInAs) épitaxié par MBE sur un substrat en InP.

Dans tous les cas, on peut optimiser le composant obtenu, pour un fonctionnement à une longueur d'onde donnée, par un choix adéquat des épaisseurs et compositions des puits et des barrières.

On donne ci-après un exemple de modulateur conforme à l'invention, réalisé dans le système (GaInAs/AlInAs).

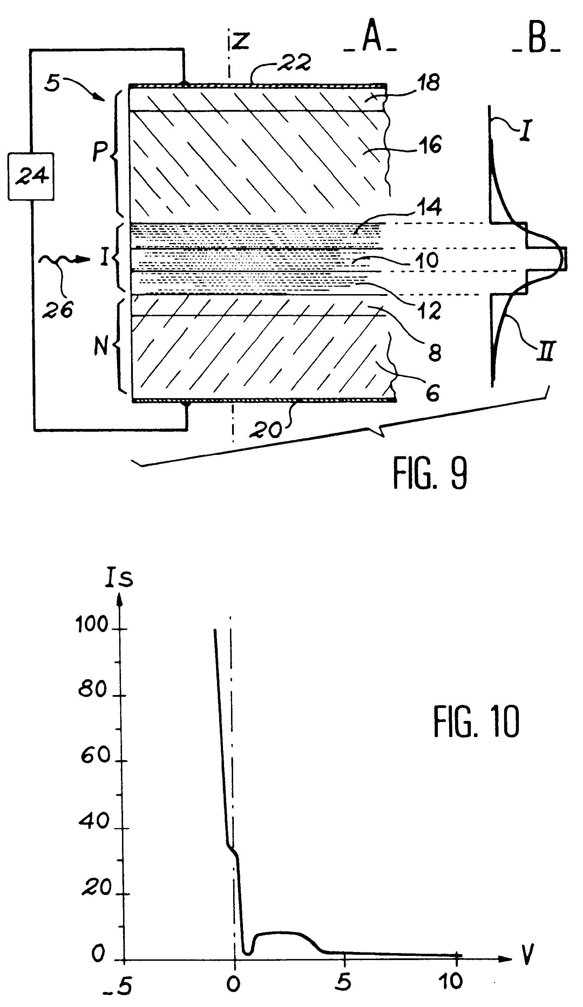

Le schéma de la structure épitaxiée de ce modulateur, le profil d'indice optique correspondant à cette structure et le profil de l'intensité lumineuse de l'onde guidée sont représentés sur la figure 9 respectivement en A, B-I et B-II.

Le modulateur conforme à l'invention, qui est schématiquement représenté sur la figure 9-A comprend une diode 5 de type PIN qui est obtenue par épitaxie et dont la région intrinsèque I comprend un super-réseau 10 très couplé, réalisé avec le système (GaInAs/AlInAs).

La région N de la diode comprend un substrat 6 en InP-n$^+$ dont l'épaisseur est par exemple de 80 micromètres et, sur ce substrat, une couche-tampon 8 en AlInAs-n de 0,1 micromètre d'épaisseur.

Le super-réseau a, dans la diode 5, l'indice optique le plus élevé et comprend 10 couches de GaInAs non intentionnellement dopé de 6 nm d'épaisseur chacune, qui alternent avec 10 couches de AlInAs non intentionnellement dopé de 1,5 nm d'épaisseur chacune.

La région I comprend aussi deux multicouches 12 et 14 identiques, entre lesquelles est placé le super-réseau et dont l'indice optique est inférieur à celui du super-réseau mais supérieur à ceux des régions N et P, ces derniers indices étant identiques.

Chacune des multicouches 12 et 14 comprend 12 couches de GaInAs non intentionnellement dopé de 2,7 nm d'épaisseur chacune, qui alternent avec 12 couches de AlInAs non intentionnellement dopé de 3,7 nm d'épaisseur chacune.

La région P de la diode comprend une couche de confinement 16 en AlInAs-p de 2 micromètres d'épaisseur. La région P comprend en outre, sur la couche 16, une couche de contact 18 en GaInAs-p + de 0,1 micromètre d'épaisseur.

On a indiqué sur la figure 9-A la direction Z de croissance du super-réseau. Cette direction Z est perpendiculaire au plan des couches du super-réseau.

Des couches métalliques 20 et 22, par exemple en or, sont respectivement déposées sur la face libre du substrat 6 et sur la face libre de la couche 18. Des moyens de commande 24 appropriés sont prévus pour appliquer, entre les électrodes constituées par les couches métalliques 20 et 22, une tension électrique variable v.

Dans la diode 5, le champ électrique dans la région I non intentionnellement dopée n'est pas nul lorsque v=0 mais est égal au champ électrique autoconstruit. Il devient nul pour une tension de polarisation égale ici à -0,5 V. Un champ faible, parallèle à Z, est appliqué à la région I en faisant varier la tension v de v1=-0,5V à v2=+0,5V, ce qui correspond à une excursion de 1V. Par convention, les tensions de polarisation sont comptées positivement dans le régime inverse de la diode.

Dans le domaine de la transmission de signaux numériques sous forme optique, les moyens 24 sont prévus pour faire passer v de v1 à v2 et inversement.

La structure représentée sur la figure 9-A est adaptée à la modulation d'un faisceau lumineux 26 polarisé rectilignement dans le plan des couches (fonctionnement TE), dont la longueur d'onde est de l'ordre de 1,5 micromètre. Ce faisceau 26 est produit par un moyen approprié, par exemple une diode-laser (non représentée), et injecté, perpendiculairement à la direction Z et au niveau du super-réseau 10, dans l'une des faces de la diode 5, face qui est parallèle à cette direction Z, de telle sorte que le maximum de l'intensité lumineuse injectée se situe au niveau de ce super-réseau (figure 9-B-II).

Lorsque v est égale à v1, le super-réseau est transparent et la lumière injectée le traverse, avec une très faible absorption. Au contraire, lorsque v est égale à v2, le super-réseau devient opaque.

Les deux couches 12 et 14 permettent ici d'augmenter le confinement optique c'est-à-dire le pourcentage de l'énergie lumineuse contenue dans le super-réseau, dans la configuration "ondes guidées".

Cependant, le super-réseau (électro-absorbant) pourrait aussi bien occuper toute la région intrinsèque I et les couches 12 et 14 seraient alors supprimées.

On a réalisé des guides d'ondes plans en forme de rubans d'une largeur de 100 micromètres en gravant jusqu'au substrat une structure massive PIN du genre de celle de la figure 9-A. Des électrodes ont ensuite été déposées du côté P et du côté N. Ceci a permis d'obtenir par clivage, en plusieurs exemplaires, un guide d'onde d'une longueur de 560 micromètres.

Les caractéristiques de ce guide d'onde utilisé en tant que dispositif de modulation sont données sur la figure 10 où l'on voit la courbe des variations de l'intensité lumineuse Is en sortie de ce dispositif, exprimée en unités arbitraires, en fonction de la tension inverse V que l'on applique à la diode PIN du dispositif pour polariser cette diode.

Un taux d'extinction de 20 dB (99%) a été obtenu avec un faisceau lumineux polarisé rectilignement dans le plan des couches du super-réseau (TE), de longueur d'onde égale à 1,55 micromètre, et une tension électrique de commande égale à 1V. L'atténuation à l'état passant, qui a été mesurée par ailleurs, est inférieure à 3 dB.

Des guides-rubans étroits (à confinement bidimensionnel) peuvent être aisément obtenus en réduisant la largeur des rubans qui ont été gravés.

## Revendications

1. Procédé de modulation de l'intensité d'un faisceau lumineux, ce procédé comprenant :
   - l'injection du faisceau lumineux dans un élément semiconducteur électro-absorbant, et
   - l'application, à cet élément, d'un champ électrique dont on fait varier l'amplitude au cours du temps afin de faire varier l'intensité du faisceau lumineux, l'élément électro-absorbant comprenant un super-réseau (10) très couplé dont les couches sont empilées suivant une direction (Z) qui constitue la direction de croissance du super-réseau, procédé caractérisé en ce que le faisceau lumineux est injecté dans le super-réseau parallèlement au plan des couches de ce super-réseau, en ce que ce dernier est prévu pour guider le faisceau lumineux ainsi injecté, en ce que le champ électrique est faible et appliqué suivant la direction de croissance du super-réseau, ce qui provoque l'apparition d'une absorption dans un domaine de longueurs d'ondes où le super-réseau est transparent en l'absence de champ électrique, ladite absorption étant engendrée par une transition oblique à basse énergie dans le super-réseau, et en ce que le super-réseau (10) est choisi tel que la longueur d'onde (l1) du faisceau lumineux soit contenue dans ce domaine.

2. Procédé selon la revendication 1, caractérisé en ce que l'épaisseur du super-réseau est de l'ordre de 0,5 micromètre et en ce que le champ électrique est obtenu pour une tension de commande de l'élément de l'ordre de 1V.

3. Procédé selon l'une quelconque des revendications 1 et 2, caractérisé en ce que le super-réseau (10) est compris dant le coeur (I) d'un guide d'ondes lumineuses, ce guide d'onde comportent deux couches (P, N) entre lesquelles se trouve le coeur et dont les indices optiques respectifs sont inférieurs à l'indice optique du super-réseau (10).

4. Procédé selon la revendication 3, caractérisé en ce que le guide d'onde est une diode de type PIN que l'on polarise, dont la région intrinsèque I contient le super-réseau et dont les régions P et N ont des indices optiques inférieurs à l'indice optique du super-réseau (10).

5. Procédé selon l'une quelconque des revendications 1 à 4, caractérisé en ce que la longueur d'onde du faisceau lumineux est de l'ordre de 1,5 micromètre et en ce que le super-réseau est un empilement de couches alternées de GaInAs et de AlInAs.

6. Procédé selon l'une quelconque des revendications 1 à 4, caractérisé en ce que la longueur d'onde du faisceau lumineux est de l'ordre de 1,5 micromètre et en ce que le super-réseau est un empilement de couches alternées de GaInAs et de InP.

7. Procédé selon l'une quelconque des revendications 1 à 4, caractérisé en ce que la longueur d'onde du faisceau lumineux est de l'ordre de 0,8 micromètre et en ce que le super-réseau est un empilement de couches alternées de GaAs et de GaAlAs.

8. Dispositif de modulation de l'intensité d'un faisceau lumineux, ce dispositif comprenant :
   - un élément semiconducteur électro-absorbant destiné à recevoir le faisceau lumineux, et
   - des moyens de commande (24) prévus pour appliquer à cet élément une tension électrique et pour faire varier l'amplitude de la tension au cours du temps, afin de faire varier l'intensité du faisceau lumineux, l'élément électro-absorbant comprenant un super-réseau (10) très couplé dont les couches sont empilées suivant une direction (Z) qui constitue la direction de croissance du super-réseau, dispositif caractérisé en ce que le super-réseau est prévu pour guider le faisceau lumineux lorsque celui-ci est injecté dans le super-réseau parallèlement au plan des couches de ce super-réseau, en ce que les moyens de commande (24) sont prévus pour appliquer une tension électrique qui engendre, dans le super-réseau, un champ électrique faible et parallèle à la direction de croissance du super-réseau, ce qui provoque l'apparition d'une absorption dans un domaine de longueurs d'ondes où le super-réseau est transparent en l'absence de champ électrique, ladite absorption étant engendrée par une transition oblique à basse énergie dans le super-réseau, de façon à pouvoir moduler l'intensité d'un faisceau lumineux dont la longueur d'onde (l1) est contenue dans ce domaine.

**Patentansprüche**

1. Verfahren zur Modulation der Intensität eines Lichtbündels, wobei dieses Verfahren
   - die Injektion des Lichtbündels in ein elektroabsorbierendes Halbleiterelement und
   - das Anlegen an dieses Element eines elektrischen Feldes umfaßt, dessen Amplitude man im Verlauf der Zeit variieren läßt, um die Intensität des Lichtbündels variieren zu lassen, wobei das elektroabsorbierende Element ein stark gekoppeltes Übergitter (10) umfaßt, dessen Schichten in einer Richtung (Z), welche die Wachstumsrichtung des Übergitters darstellt, übereinandergeschichtet sind,
   wobei das Verfahren dadurch gekennzeichnet ist, daß das Lichtbündel in das Übergitter parallel zur Ebene der Schichten dieses Übergitters injiziert wird, daß letzteres dazu vorgesehen ist, das so injizierte Lichtbündel zu führen, daß das elektrische Feld schwach ist und in Wachstumsrichtung des Übergitters angelegt ist, was zum Auftreten einer Absorption in einem Wellenlängenbereich führt, in dem das Übergitter in Abwesenheit eines elektrischen Feldes transparent ist, wobei genannte Absorption durch einen niederenergetischen schrägen Übergang in dem Übergitter erzeugt wird, und daß das Übergitter (10) derart gewählt ist, daß die Wellenlänge (11) des Lichtbündels in diesem Bereich enthalten ist.

2.  Verfahren nach Anspruch 1, dadurch gekennzeichnet, daß die Dicke des Übergitters von der Größenordnung 0,5 μm ist und daß das elektrische Feld für eine Steuerspannung des Elements von der Größenordnung 1 V erhalten wird.

3.  Verfahren nach einem dem Ansprüche 1 und 2, dadurch gekennzeichnet, daß das Übergitter (10) in dem Kern (I) eines Wellenleiters für Lichtwellen enthalten ist, wobei dieser Wellenleiter zwei Schichten (P, N) umfaßt, zwischen denen sich der Kern befindet und deren jeweilige optische Indizes kleiner sind als der optische Index des Übergitters (10).

4.  Verfahren nach Anspruch 3, dadurch gekennzeichnet, daß der Wellenleiter eine Diode vom PIN-Typ ist, die man polarisiert, deren eigenleitende Zone I das Übergitter enthält und deren P- und N-Zonen optische Indizes haben, die kleiner sind als der optische Index des Übergitters (10).

5.  Verfahren nach einem der Ansprüche 1 bis 4, dadurch gekennzeichnet, daß die Wellenlänge des Lichtbündels von der Größenordnung 1,5 μm ist und daß das Übergitter eine Aufschichtung von sich abwechselnden Schichten von GaInAs und von AlInAs ist.

6.  Verfahren nach einem der Ansprüche 1 bis 4, dadurch gekennzeichnet, daß die Wellenlänge des Lichtbündels von der Größenordnung 1,5 μm ist und daß das Übergitter eine Aufschichtung von sich abwechselnden Schichten von GaInAs und von InP ist.

7.  Verfahren nach einem der Ansprüche 1 bis 4, dadurch gekennzeichnet, daß die Wellenlänge des Lichtbündels von der Größenordnung 0,8 μm ist und daß das Übergitter eine Aufschichtung von sich abwechselnden Schichten von GaAs und von GaAlAs ist.

8.  Vorrichtung zur Modulation der Intensität eines Lichtbündels, wobei diese Vorrichtung
    - ein elektroabsorbierendes Halbleiterelement, das dazu bestimmt ist, das Lichtbündel zu empfangen, und
    - Steuerungseinrichtungen (24) umfaßt, die vorgesehen sind, um an dieses Element eine elektrische Spannung anzulegen und um die Amplitude der Spannung im Verlauf der Zeit variieren zu lassen, um die Intensität des Lichtbündels variieren zu lassen, wobei das elektroabsorbierende Element ein stark gekoppeltes Übergitter (10) umfaßt, dessen Schichten in einer Richtung (Z), welche die Wachstumsrichtung des Übergitters darstellt, übereinandergeschichtet sind,

    wobei die Vorrichtung dadurch gekennzeichnet ist, daß das Übergitter dazu vorgesehen ist, das Lichtbündel, wenn es in das Übergitter parallel zur Ebene der Schichten dieses Übergitters injiziert wird, zu führen, und daß die Steuerungseinrichtungen (24) dazu vorgesehen sind, eine elektrische Spannung anzulegen, die in dem Übergitter ein schwaches und zur Wachstumsrichtung des Übergitters paralleles elektrisches Feld erzeugt, was zum Auftreten einer Absorption in einem Wellenlängenbereich führt, in dem das Übergitter in Abwesenheit eines elektrischen Feldes transparent ist, wobei genannte Absorption durch einen niederenergetischen schrägen Übergang in dem Übergitter derart erzeugt wird, daß die Intensität eines Lichtbündels, dessen Wellenlänge (I1) in diesem Bereich enthalten ist, moduliert werden kann.

## Claims

1.  Method to modulate the intensity of a luminous beam, this method including:
    - the injection of the luminous beam into an electro-absorbant semiconductive element, and
    - applying to this element an electric field whose amplitude is made to gradually vary so as vary the intensity of the luminous beam, the electro-absorbant element includes a tightly coupled super-grid (10) whose films are stacked along a direction constituting the growth direction (Z) of the super-grid, characterized in that the luminous beam is injected into the super-grid parallel to the plane of the films of this super-grid, that this super-grid is provided to guide the injected luminous beam, that the electric field is weak and applied along the growth direction of the super-grid, which provokes the appearance of a low-energy oblique transition in a domain of wavelengths where the super-grid is transparent, in the absence of any electric field, said absorption being produced by a low energy oblique transition in the super-grid and that the super-grid (10) is such that the wavelength (l1) of the luminous beam is contained in this domain.

2. Method according to claim 1, characterized in that the thickness of the super-grid is about 0.5 micrometers and that the electric field is obtained for a control voltage of about IV for controlling the element.

3. Method according to claim 1 or 2, characterized in that the super-grid (10) is included in the core (I) of a luminous wave guide, this wave guide comprising two films (P,N) between which the core is found and whose respective optical indices are smaller than the optical index of the super-grid (10).

4. Method according to claim 3, characterized in that the wave guide is a PIN type diode which is polarized, whose intrinsic region I contains the super-grid and whose regions P and N have optical indices smaller than the optical index of the super-grid (10).

5. Method according to any one of the claims 1 to 4, characterized in that the wavelength of the luminous beam is about 1.5 micrometers and that the super-grid is constituted by a stacking of alternate GaInAs and AlInAs films.

6. Method according to any one of the claims 1 to 4, characterized in that the wavelength of the luminous beam is about 1.5 micrometers and that the super-grid is constituted by a stacking of alternate GaInAs and InP films.

7. Method according to any one of the claims 1 to 4, characterized in that the wavelength of the luminous beam is about 0.8 micrometers and that the super-grid is constituted by a stacking of alternate GaAs and GaAlAs films.

8. Device for modulating the intensity of a luminous beam, this device including:
   - an electro-absorbant semiconductive element intended to receive the luminous beam, and
   - control means (24) provided to apply to this element an electric voltage and to gradually vary the amplitude of the voltage so as to vary the intensity of the luminous beam, the electro-absorbant element including a tightly coupled super-grid (10) whose films are stacked along a direction which constitutes the growth direction (Z) of the super-grid, characterized in that the super-grid is provided to guide the luminous beam when the latter is injected into the super-grid parallel to the plane of the films of this super-grid, that the control means (24) are provided to apply an electric voltage which generates in the super-grid a weak electric field which is parallel to the growth direction of the super-grid, which provokes the appearance of an absorption in a domain of wavelengths where the super-grid is transparent in the absence of any electric field, said absorption being produced by a low energy oblique transition in the super-grid, so as to be able to modulate the intensity of a luminous beam, whose wavelength (l1) is contained in this domain.

FIG. 1

FIG. 2

FIG. 3

FIG. 4

FIG. 5

FIG. 6

FIG. 7

FIG. 8

FIG. 9

FIG. 10